# EUROPÄISCHE PATENTSCHRIFT

(11) **EP 1 125 895 B1**
(45) Veröffentlichungstag und Bekanntmachung des Hinweises auf die Patenterteilung: **03.05.2006**
(21) Anmeldenummer: 01103493.1
(22) Anmeldetag: 15.02.2001
(51) Int. Cl.: C02F 1/46, C02F 1/461, C02F 5/02

(54) **Verfahren sowie Vorrichtung zur Verhütung von Wasserstein in wasserführenden Systemen**
Process and device for scale prevention in water systems
Procédé et dispositif de traitement de l'eau pour la prévention de la formation de tartre

(30) Priorität: 18.02.2000 DE 10007504
(43) Veröffentlichungstag der Anmeldung: 22.08.2001
(73) Patentinhaber: CWW Vermögensverwaltungs GmbH, 9511 Rehau (DE)
(72) Erfinder: Schulze, Christel, 95100 Selb (DE)
(74) Vertreter: Graf, Helmut

(56) Entgegenhaltungen:
- EP-A- 0 751 096
- EP-A- 1 002 765
- DE-A- 3 838 931
- DE-A- 4 229 740
- DE-A- 19 602 369
- DE-A- 19 705 965
- US-A- 4 786 380

## Beschreibung

Die Erfindung bezieht sich auf eine Vorrichtung gemäß Oberbegriff Patentanspruch 1.

Weiterhin sind Dosieranlagen bekannt, mit denen dem Wasser kristallisationsinhibierende chemische Stoffe beigemischt werden. Nachteil dieser Vorrichtungen bzw. Verfahren ist aber, daß sie das Wasser nachhaltig chemisch verändern, unter anderem bei mangelhafter Sorgfalt während des Betriebes Folgeprobleme, beispielsweise in Form von Korrosion, Verkeimung und anderen, die Güte bzw. die Verwendung des Wassers beeinträchtigenden Faktoren auftreten können, Im Falle von Trinkwasser besteht darüber hinaus die Gefahr gesundheitlicher Schäden. Weitere Nachteile sind der permanente Einsatz von Chemikalien bei der Dosierung des Wassers oder zur Regeneration der Anlagen sowie der teilweise hohe technische Aufwand, der zum Beispiel bei Umkehr-Osmoseanlagen besteht. Insgesamt wirken sich diese bekannten Vorrichtungen und Verfahren auch nachteilig auf die Umwelt und die schützenswerten Wasserresourcen aus.

Bekannt sind auch Elektrolyseanlagen, die mit Hilfe von internen Elektroden Wasser bzw. wässerige Lösungen von Salzen zersetzen. Diese Anlagen werden allerdings weniger in der Wasseraufbereitung und Wasserbehandlung, sondern bevorzugt in der chemischen Industrie eingesetzt, beispielsweise als Verfahren zur Chlor-Alkahli-Elektrolyse von Kochsalzlösungen zur Gewinnung von Natronlauge und Chlor. Die Produktion von Chlor in salzhaltigem Wasser wird auch bei der elektrolytischen Desinfektion von Wasser, z. B. bei Schwimmbädern, ausgenutzt.

Bekannt ist weiterhin auch, daß kalkhaltiges Wasser zur Bildung von Wassersteinablagerungen an Wandungen von wasserführenden Leitungen usw. führt und diese Kalksteinablagerungen erhebliche Schäden an wasserführenden Einrichtungen verursachen, deren Gebrauch beeinträchtigen oder sogar zu deren Zerstörung führen.

Bekannt ist weiterhin auch eine Vorrichtung der gattungsmäßigen Art (DE 38 38 931 A1), bei der in einem von wasserdurchströmten Gehäuse eine gemeinsame Achse umschließend und konzentrisch zueinander sowie durch Isolierkörper elektrisch voneinander getrennt zwei zylinderförmige Elektroden vorgesehen sind, die perforiert oder gitterartig ausgebildet sind, so daß die Elektroden jeweils radial vom Wasser durchströmt werden können. Durch die Elektroden ist der Innenraum des Gehäuses in einen die äußere Elektrode umschließenden äußeren Ringraum, der mit einem Anschluß zum Zuführen des Wassers in Verbindung steht, sowie in einen von der innenliegenden Elektrode umschlossenen Raum unterteilt, der mit einem Anschluß zum Abführen des behandelten Wassers in Verbindung steht. Nachteilig bei der bekannen Vorrichtung ist, daß die Elektroden einzeln im Inneren des Gehäuses montiert sind, also keine Einheit bilden und daher ein Auswechseln der Elektroden relativ aufwendig ist.

Aufgabe der Erfindung ist es, eine Vorrichtung aufzuzeigen, mit der in einfacher Weise ein Verhütung von Wasserstein in wasserführenden Systemen ohne Einsatz von chemischen Mitteln möglich ist. Zur Lösung dieser Aufgabe ist eine Vorrichtung entsprechend dem Patentanspruch 1 ausgebildet.

Die erfindungsgemäße Vorrichtung ermöglicht eine wirksame Verhinderung von Wassersteinablagerungen ohne signifikante chemische Veränderungen des Wassers ohne Einsatz von Chemikalien.

Der Erfindung liegt die Erkenntnis zugrunde, daß sich der in kalkhaltigem Wasser enthaltene Kalk bevorzugt nur aus dem chemisch gelösten, ionischen Zustand an Fremdkörperoberflächen anlagert und dann die harten, schwer entfernbaren Ablagerungen bzw. Inkrustungen bildet. Dabei kann sich Kalk nach den Regeln der Thermodynamik aber nur solange ausscheiden, solange er sich im sogenannten übersättigten Zustand befindet. Dies bedeutet, daß sich niemals die gesamte, im Wasser vorhandene Klakmenge, sondern immer nur der übersättigte Anteil ausscheidet. Aufgrund der kinetischen Hemmung fällt aber Kalk in niedrig übersättigtem Zustand nicht spontan im Wasservolumen aus, sondern lagert sich (energetisch begünstigt) bevorzugt an Fremdkörperoberflächen an, was dann die vorstehend genannten Wassersteinablagerungen, harten schwer entfernbaren Ablagerungen bzw. Inkrustungen mit den genannten Nachteilen bedingt.

Bei der Erfindung werden nun im calziumcarbonathaltigen Wasser durch temporäre und lokale Änderungen des PH-Wertes auf elektrolytischem Wege Calziumcarbonat-Nanokristalle erzeugt, und zwar dadurch, daß bei der Elektrolyse im Bereich der wenigstens einen als Kathode geschalteten oder wirkenden Elektrode der Elektrodenanordnung ein alkalisches Milieu im calziumkarbonathaltigen Wasser geschaffen wird und dieses Milieu die spontale Kristallisation von Kalk zur Bildung der Nanokristalle bewirkt. Diese stehen dann im Wasser als Impfkristalle für die Bindung des gesamten, im Übersättigungszustand befindlichen Kalks zur Verfügung, wobei die in Folge der weiteren Kristallisation an den Impfkristallen gebildeten Kalkkristalle über lange Zeit im Wasser schwebfähig sind und insbesondere auch oberflächlich keine ausreichenden Bindungskräfte untereinander und/oder zu Fremdoberflächen haben, so daß harte Abscheidungen oder Ablagerungen, die zu Störungen im Wasser führenden Systemen führen könnten, nicht auftreten, wohl aber dem Wasser der gelöste, überschüssige Kalk entzogen wird.

Die Neuerung wird im Folgenden anhand der Figuren an Ausführungsbeispielen näher erläutert. Es zeigen:
- Fig. 1: in vereinfachter Darstellung einen Schnitt durch eine Vorrichtung gemäß der Erfindung;
- Fig. 2: in vereinfachter Darstellung einen Schnitt entsprechend der Linie I - I der Figur 1;
- Fig. 3: in vergrößerter Darstellung einen Teilschnitt durch die rohrförmige Elektrodenanordnung der Vorrichtung der Figur 1;
- Fig. 4: in vereinfachter Darstellung eine Elektrodeneinheit bei einer weiteren möglichen Ausführungsform der Erfindung.

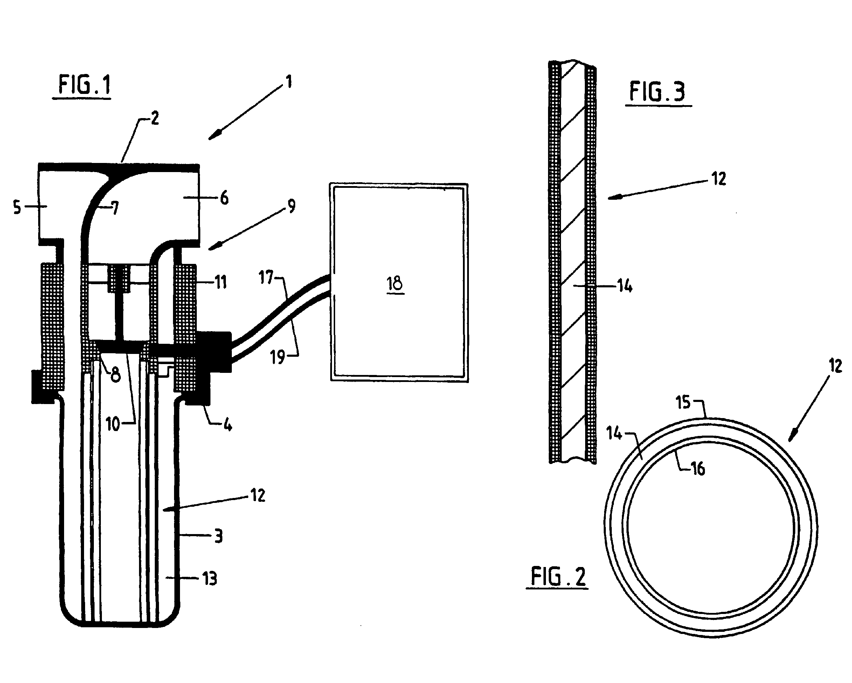

Die in der Figur 1 allgemein mit 1 bezeichnete Vorrichtung zur Verhütung von Wasserstein in wasserführenden Systemen besitzt ein Gehäuse, welches ähnlich den bekannten Gehäusen von Hauswasserfiltem ausgebildet ist, d. h., das Gehäuse besteht im wesentlichen aus einem oberen Gehäuseteil 2 und einem unteren, als langgestreckte, geschlossene Kappe ausgebildeten Gehäuseteil 3, welches mit seiner offenen Seite über eine Verschraubung 4 an dem unteren, offenen Ende des Gehäuseteils 2 dicht befestigt werden kann. Das Gehäuseteil 2 besitzt einen Anschluß 5, der den Wassereinlaß bildet, sowie einen Anschluß 6, der den Wasserauslaß bildet. Das untere Gehäuseteil 3, aber auch das obere Gehäuseteil 2 (im Anschlußbereich mit dem Gehäuse Teil 3) sind kreiszylinderförmig ausgebildet, und zwar konzentrisch zu einer Mittelachse M, die senkrecht zu den Achsen der Anschlüsse 5 und 6 liegt. Die Anschlüsse 5 und 6 sind achsgleich angeordnet.

Im Gehäuseteil 2 ist weiterhin eine von einem rohrförmigen Abschnitt gebildete Wasserführung 7 derart vorgesehen, daß diese Wasserführung oder dieser Kanal 7 einerseits den Anschluß 6 bildet, andererseits aber im Inneren des Gehäuses einen internen Anschluß 8 mit einer Öffnung, die mit ihrer Achse achsgleich mit der Mittelachse M angeordnet ist und in einer Ebene senkrecht zu dieser Mittelachse liegt.

Im Bereich des Anschlusses 8 ist ein Durchflußsensor 9 vorgesehen, der bei der dargestellten Ausführungsform aus einem in der Wasserführung 7 angeordneten und zugleich auch als Rückschlagventil dienenden Sensorelement 10 und aus einer äußeren Spule 11 besteht, deren Induktivität sich in Abhängigkeit von der Lage des Sensorkörpers 10 verändert und die damit ein von der Durchführungsmenge abhängiges Sensorsignal ermöglicht. Die Position des Sensorkörpers 10 ist abhängig von der die Wasserführung 7 durchströmenden Wassermenge.

Unterhalb des Sensorkörpers 10 bzw. des Durchflußmessers 9 ist am Anschluß 8 eine rohrförmige oder hohlzylinderförmige Elektrodeneinheit 12 mit ihrem einen offenen Ende angeschlossen. Das andere Ende der Elektrodeneinheit 12 stützt sich gegen die Innenseite des Bodens des Gehäuseteils 3 ab und ist dort abgedichtet.

Zwischen der Außenfläche der Elektrodeneinheit 12 und der Innenfläche der zylinderförmigen Umfangswende der Gehäuseteile 2 und 3 ist ein Ringkanal 13 gebildet, der mit dem Anschluß 5 in Verbindung steht, so daß vom Anschluß 5 zum Anschluß 6 hin ein Wasserstrom möglich ist, und zwar durch den Ringkanal 13, durch die Wandung der Elektrodeneinheit 12 in das Innere der Elektrodeneinheit und von dort über den Kanal 7 an den Anschluß 6.

Die Elektrodeneinheit 12 in den Figuren 2 und 3 besteht aus einem zylinderförmigen Stützkörper 14 aus einem porösen, wasserdurchlässigen, elektrisch isolierenden Werkstoff, beispielsweise aus Sinter-Kunststoff. An der Außen- und Innenfläche ist, der Stützkörper 14 jeweils mit einer elektrisch leitenden oder einer Elektrode bildenden Schicht 15 bzw. 16 versehen. Bei der dargestellten Ausführungsform bestehen diese Schichten aus einem Kohlefaservlies.

Der Durchflußsensor 9 ist über eine Sensorleitung 17 an eine Steuerelektronik 18 angeschlossen, die unter anderem auch zur Ansteuerung der Elektrodeneinheit 12 dient und über eine Versorgungsleitung 19 mit den Elektroden 15 und 16 verbunden ist.

Um ein schnelles Austauschen der Elektrodeneinheit 12 zu ermöglichen, ist der Anschluß 8 so ausgebildet, daß nach dem Ansetzen der Elektrodeneinheit 12 an diesen Anschluß zugleich auch die elektrische Verbindung zwischen den wenigstens zwei Leitern der Versorgungsleitung 19 und der jeweiligen Elektrode 15 bzw. 16 hergestellt ist.

Einerseits dient die Elektrodeneinheit 12 als herkömmliches Filter. Hierfür ist die Porösität des Stützkörpers 14 in geeigneter Weise gewählt. Die Elektrodeneinheit 12 dient aber insbesondere auch für eine elektrolytische Behandlung des das Gehäuse durchströmenden Wassers in der Weise, daß durch eine bei der Elektrolyse erreichte, d. h. im Bereich der als Kathode wirkenden Elektrode erreichte lokale Änderung des PH-Wertes, die kinetische Hemmung der Kristallisation der im Wasser vorhandenen Kalkmenge aufgehoben wird und es so zur Bildung sogenannter Nanokristalle im Wasservolumen kommt, die dann aufgrund ihrer großen spezifischen Oberfläche als Impfkristalle für die Bindung des gesamten, im Übersättigungszustand befindlichen Kalks zur Verfügung stehen. An diesen Nanokristallen bzw. Impfkristallen erfolgt dann die weitere Kristallisation und dabei die Abscheidung weiterer, im Wasser gelöster Kalkmengen, so daß dem Wasser soviel Kalk entzogen wird, daß sich Kalk nicht an Fremdkörperoberflächen, wie z. B. an Oberflächen wasserführender Rohre, in Boilern usw. ablagern kann. Die durch Kristallisation an den Impfkristallen entstehenden Kristalle sind über Stunden bis zu Tagen im Wasser schwebefähig und besitzen oberflächlich keine ausreichenden Bindungskräfte untereinander oder zu Oberflächen, so daß es zu keinen harten Ablagerungen an Oberflächen oder zu den Wasserfluß störenden Kalkausscheidungen kommen kann.

Die Steuerelektronik 18 liefert für die elektrolytische, lokale Änderung des PH-Wertes, eine Gleichspannung an die Elektroden 15 und 16 mit unterschiedlicher Polarität, beispielsweise eine Gleichspannung im Niederspannungsbereich zwischen 2 - 24 Volt. Diese Gleichspannung wird beispielsweise in Abhängigkeit von dem vom Durchflußsensor 9 ermittelten Wasser-Durchfluß gesteuert oder geschaltet, beispielsweise getaktet oder in Form von Gleichspannungsimpulsen, deren Anzahl je Zeiteinheit proportional zum Wasserdurchfluß ist. Bei fehlendem Wasserfluß wird die Spannung an den Elektroden abgeschaltet.

Grundsätzlich besteht auch die Möglichkeit, die Steuerelektronik 18 so auszubilden, daß die zwischen den Elektroden 15 und 16 anliegende Spannung sich aus einem Gleichspannungsanteil und wenigstens einer überlagerten Wechselspannung und/oder überlagerten Impulsen zusammensetzt. Weiterhin besteht die Möglichkeit, daß die an den Elektroden 15 und 16 anliegende Spannung bzw. deren Polarität nach einem bestimmten Zeitprogramm geändert wird.

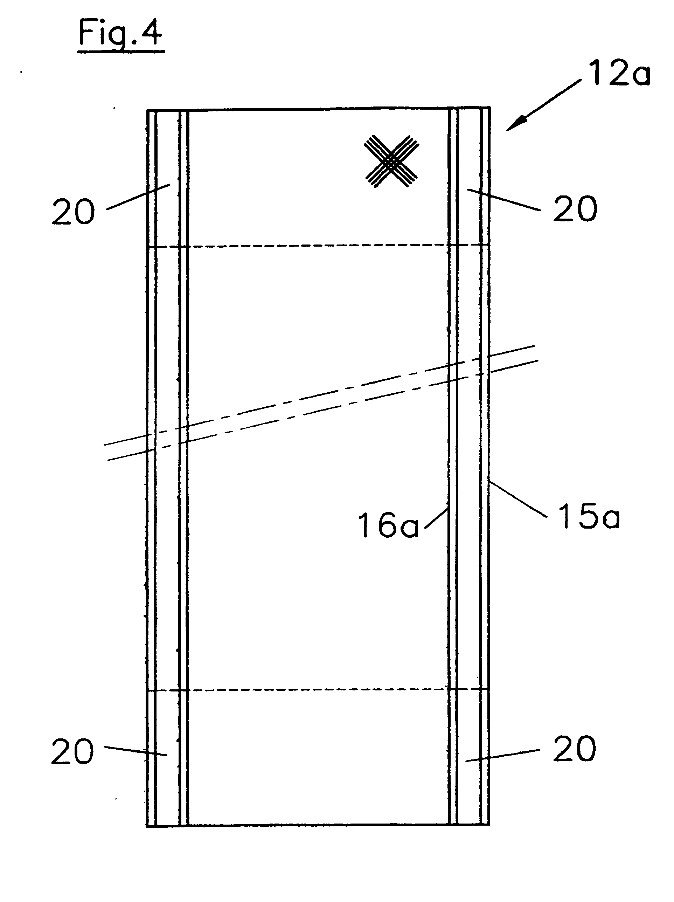

Die Figur 4 zeigt in vereinfachter Darstellung und im Schnitt eine Elektrodeneinheit 12a, die anstelle der Elektrodeneinheit in der Vorrichtung 1 verwendet werden kann.

Die Elektrodeneinheit 12a besteht wiederum aus den beiden rohrartigen, konzentrisch zueinander angeordneten Elektroden 15a und 16a, die bei dieser Ausführungsform jeweils aus einem siebartigen elektrisch leitenden Material, beispielsweise aus einem Draht-Sieb aus Metall, bevorzugt aus Titan, hergestellt sind. Am oberen und am unteren Ende der Elektrodeneinheit 12a ist zwischen den Elektroden 15a und 16a ein Ring 20 aus einem elektrisch isolierenden Material, beispielsweise aus Keramik angeordnet, der die Elektroden auf Abstand hält. Um eine entkeimende Wirkung zu erzielen, sind die Elektroden 15a und 16a vorzugsweise mit einem Edelmetall-MischOxid, beispielsweise mit Iridium-Oxid beschichtet.

Bei Verwendung der Elektrodenanordnung 12a erfolgt wiederum ein Ansteuern der Elektroden 15a und 16a mit unterschiedlicher Polarität, beispielsweise mit einer Gleichspannung unter Verwendung der Steuerelektronik 18. Auch hier kann die Gleichspannung wiederum in Abhängigkeit von dem mit dem Durchflußsensor 9 gemessenen Wasserdurchfluß gesteuert oder geschaltet werden, und zwar beispielsweise getaktet oder in Form von Gleichspannungsimpulsen, deren Anzahl je Zeiteinheit proportional zum Wasserdurchfluß ist. Bei fehlendem Wasserdurchfluß wird die Spannung an den Elektroden abgeschaltet. Weiterhin besteht auch bei Verwendung der Elektrodenanordnung 12a die Möglichkeit, der an den Elektroden anliegenden Gleichspannung eine Wechselspannung zu überlagern und/oder die Polarität der anliegenden Gleichspannung nach einem bestimmten Zeitprogramm zu ändern.

Unabhängig von der speziellen Elektrodeneinheit beruht die Wirkungsweise der Vorrichtung darauf, daß elektrolytisch sogenannte Impf-Kristalle (CaCO₃-Kristalle) gebildet werden, an denen sich dann im Wasser vorhandener überschüssiger Kalk bevorzugt anlagern kann, so daß Kalkablagerungen an den Wänden des wasserführenden, auf die Vorrichtung folgenden wasserführenden Systems vermieden werden.

Die Erfindung wird voranstehend an Ausführungsbeispielen beschrieben. Es versteht sich, daß zahlreiche Änderungen sowie Abwandlungen möglich sind, ohne daß dadurch der Erfindung zugrunde liegende Erfindungsgedanke verlassen wird.

### Bezugszeichenliste

- 1: Vorrichtung
- 2,3: Gehäuseteil
- 4: Verschraubung
- 5,6: Anschluß
- 7: Kanal
- 8: interner Anschluß
- 9: Durchflußsensor
- 10: Sensorelemet
- 11: Spule
- 12, 12a: Elektrodeneinheit
- 13: Ringkanal
- 14: Stützkörper
- 15,16, 15a, 16a: Elektrode
- 17: Sensorleitung
- 18: Steuerelektronik
- 19: Versorgungsleitung
- 20: Isolierring

## Patentansprüche

1. Vorrichtung zur Verhütung von Wassersteinbildung in Systemen, die calziumcarbonathaltiges Wasser führen,
mit einem Gehäuse (2, 3), dessen von einem kappenartigen Gehäuseteil (3) gebildeter Innenraum vom Wasser durchströmbar ist und mit einen Wassereinlaß und einen Wasserauslaß bildenden Wasseranschlüssen (5, 6) in Verbindung steht, mit einer Elektrodeneinheit (12, 12a) mit wenigstens zwei an eine Spannungsquelle (18) anschließbaren und durch wenigstens einen Isolierkörper (14, 20) elektrisch voneinander getrennten, perforierten oder gitterartigen Elektroden (15, 16; 15a, 16a) aus Metall, die in dem Gehäuse (2, 3) konzentrisch zueinander, aber voneinander beabstandet angeordnet sind,
wobei die in dem kappenartigen Gehäuseteil (3) aufgenomme Elektrodeneinheit (12, 12a) den Innenraum dieses Gehäuseteils (3) in einen äußeren, die Elektrodeneinheit (12, 12a) umschließenden und mit einem Wasseranschluß (5) in Verbindung stehenden Teilraum (13) sowie in einen von der der Elektrodeneinheit (12, 12a) umschlossenen Teilraum unterteilt, der an einem Ende der Elektrodeneinheit (12, 12a) mit dem anderen Wasseranschluß (6) in Verbindung steht,
**dadurch gekennzeichnet,**
**daß** die Elektroden (15, 16; 15a, 16a) über den wenigstens einen Isolierkörper (14, 20) zu der austauschbaren Elektrodeneinheit (12, 12a) verbunden sind, und
**daß** sich die Elektrodeneinheit (12, 12a) mit ihrem dem Wassereinlaß (6) entfernt liegenden Ende zur Abdichtung gegen die Innenseite eines Bodens des Gehäuseteils (3) abstützt.

2. Vorrichtung nach Anspruch 1, **dadurch gekennzeichnet, daß** der Isolierkörper ein zwischen den Elektroden (15, 16) angeordneter poröser, wasserdurchlässiger Stützkörper (14) ist.

3. Vorrichtung nach Anspruch 2, **dadurch gekennzeichnet, daß** der Stützkörper rohr- oder hohlzylinderförmig ausgebildet ist.

4. Vorrichtung nach einem der vorhergehenden Ansprüche, **dadurch gekennzeichnet, daß** der wenigstens eine Isolierkörper (20) ringförmig ausgebildet ist.

5. Vorrichtung nach Anspruch4, **dadurch gekennzeichnet, daß** an den beiden Stirnseiten der Elektrodeneinheit (12a) jeweils ein ringförmiger Isolierkörper (20) vorgesehen ist.

6. Vorrichtung nach einem der vorhergehenden Ansprüche, **dadurch gekennzeichnet, daß** die Elektroden aus Titan bestehen.

7. Vorrichtung nach einem der vorhergehenden Ansprüche, **dadurch gekennzeichnet, daß** wenigstens eine Elektrode (14, 15) von einem Kohlefaservließ gebildet ist.

8. Vorrichtung nach einem der vorhergehenden Ansprüche, **gekennzeichnet durch** eine Steuerelektronik, die die an den Elektroden (15, 16; 15a, 16a) der Elektrodenanordnung (12, 12a) anliegende Spannung in vorgegebenen Zeitintervallen umpolt.

9. Vorrichtung nach Anspruch 8, **dadurch gekennzeichnet, daß** die an den Elektroden (15, 16; 15a, 16a) der Elektrodenanordnung (12, 12a) anliegende Spannung eine mit einer Wechselspannung und/oder mit Spannungsimpulsen überlagerte Gleichspannung ist.

10. Vorrichtung nach einem der Ansprüche 8 oder 9, **dadurch gekennzeichnet, daß** die Steuerelektronik (18) für eine Steuerung der an den Elektroden (15, 16) der Elektrodenanordnung (12) anliegenden Spannung in Abhängigkeit von Wasserdurchfluß ausgebildet ist, und zwar vorzugsweise derart, daß sie bei fehlendem Wasserfluß die Spannung an den Elektroden (15, 16) abschaltet.

## Revendications

1. Dispositif de prévention de la formation de tartre dans des systèmes transportant de l'eau contenant du carbonate de calcium, comportant un boîtier (2, 3), dont l'espace intérieur formé par une partie (3) en forme de coiffe peut être traversée par de l'eau et est en liaison avec des raccords d'eau formant une entrée d'eau et une sortie d'eau (5, 6), avec une unité d'électrodes (12, 12a) comportant au moins deux électrodes en métal, perforées ou en treillis (15, 16, 15a, 16a), pouvant être reliées à une source de tension (18) et électriquement séparées l'une de l'autre par au moins un corps isolant (14, 20), disposées de manière concentrique mais espacées l'une de l'autre, dans lequel l'unité, d'électrodes (12, 12a) placée dans la partie de boîtier en forme de coiffe (3) divise l'espace intérieur de cette partie de boîtier (3) en un espace partiel extérieur (13) entourant l'unité d'électrodes (12, 12a) et relié à un raccord d'eau:(5) et un espace partiel intérieur entouré par l'unité d'électrodes (12, 12a) qui est relié, à l'extrémité de l'unité d'électrodes (12, 12a) à l'autre raccord d'eau (6), **caractérisé en ce que** les électrodes (15,16, 15a, 16a) sont reliées à l'unité d'électrodes interchangeable (12, 12a) via le au moins un corps isolant (14, 20), et que l'unité d'électrodes (12, 12a) s'appuie, aux fins d'étanchéité, contre la paroi inférieure du fond de la partie de boîtier (3), par son extrémité éloignée de l'entrée d'eau (6).

2. Dispositif selon la revendication 1, **caractérisé en ce que** le corps isolant est un corps d'appui (14) poreux et perméable à l'eau placé entre les électrodes (15, 16).

3. Dispositif selon la revendication 2, **caractérisé en ce que** le corps d'appui est de forme tubulaire ou en forme de cylindre creux.

4. Dispositif selon l'une quelconque des revendications qui précèdent, **caractérisé en ce que** le au moins un corps isolant (20) est en forme d'anneau.

5. Dispositif selon la revendication 4, **caractérisé en ce qu'**un corps isolant (20) annulaire est à chaque fois prévu aux deux extrémités frontales de l'unité d'électrodes (12a).

6. Dispositif selon l'une quelconque des revendications qui précèdent, **caractérisé en ce que** les électrodes sont en titane.

7. Dispositif selon l'une quelconque des revendications qui précèdent, **caractérisé en ce qu'**au moins une électrode (14, 15) est formée d'un non tissé de fibres de carbone.

8. Dispositif selon l'une quelconque des revendications qui précèdent, **caractérisé par** un dispositif électronique de commende qui inverse la polarité de la tension appliquée aux électrodes (15, 16, 15a, 16a) de l'agencement d'électrodes (12, 12a) à des intervalles de temps prédéterminés.

9. Dispositif selon la revendication 8, **caractérisé en ce que** la tension appliquée aux électrodes (15, 16, 15a, 16a) de l'agencement d'électrodes (12, 12a) est une tension continue à laquelle sont superposées une tension: alternative et / ou des impulsions de tension.

10. Dispositif selon l'une quelconque des revendications 8 ou 9, **caractérisé en ce que** le système électronique de commandé (18) est configuré de manière à commander la tension appliquée aux électrodes (15, 16) de l'agencement d'électrodes (12) en fonction du débit d'eau passant, et à savoir de manière à couper la tension aux électrodes (15, 16) en l'absence de passage d'eau.

## Claims

**1.** Device for preventing the formation of incrustation in systems that carry water containing calcium carbonate,
with a housing (2, 3) through whose interior, formed by a cap-like housing part (3), water can flow and which is connected to water connections that form a water inlet and a water outlet (5, 6),
with an electrode unit (12, 12a) with at least two perforated or grille-like electrodes (15, 16; 15a, 16a) made of metal, which can be connected to a voltage source (18) and which are electrically separated from one another by at least one insulating body (14, 20), and which are arranged in the housing (2, 3) concentrically in relation to one another, but at a distance from one another,
wherein the electrode unit (12, 12a) that is accommodated in the cap-like housing part (3) divides this housing part (3) into an outer part chamber (13) which encloses the electrode unit (12, 12a) and is connected to a water connection (5), and a part chamber which is enclosed by the electrode unit (12, 12a) and which at one end of the electrode unit (12, 12a) is connected to the other water connection (6),
**characterised in that**
the electrodes (15, 16; 15a, 16a) are connected via the at least one insulating body (14, 20) to the replaceable electrode unit (12, 12a), and that to effect a seal, with its end lying furthest away from the water inlet (6) the electrode unit (12, 12a) supports itself against the inner face of a floor of the housing part (3).

**4.** Device according to one of the preceding claims, **characterised in that** the at least one insulating body (20) is designed in a ring shape.

**5.** Device according to claim 4, **characterised in that** at the two end faces of the electrode unit (12a), there is in each case a ring-shaped insulating body (20).

**6.** Device according to one of the preceding claims, **characterised in that** the electrodes are of titanium.

**7.** Device according to one of the preceding claims, **characterised in that** the at least one electrode (14,15) is formed of a carbon fibre non-woven fabric.

**8.** Device according to one of the preceding claims, **characterised by** an electronic control unit which, at predetermined intervals of time, reverses the polarity of the voltage that is present at the electrodes (15, 16; 15a, 16a) of the electrode arrangement (12, 12a).

**9.** Device according to claim 8, **characterised in that** the voltage that is present at the electrodes (15, 16; 15a, 16a) of the electrode arrangement (12; 12a) is a DC voltage that has AC voltage and/or voltage pulses superimposed on it.

**10.** Device according to one of the claims 8 or 9, **characterised in that** the electronic control unit (18) is designed to control the voltage that is present at the electrodes (15, 16) of the electrode arrangement (12), depending on the through-flow of water, and in fact preferably such that it switches off the voltage at the electrodes (15, 16) when there is no water flow.
